Europäisches Patentamt

European Patent Office

Office européen des brevets

(11) Publication number: **0 657 397 A1**

# EUROPEAN PATENT APPLICATION

(21) Application number: **94118652.0**

(22) Date of filing: **28.11.94**

(51) Int. Cl.⁶: **C04B 18/02**, C04B 14/08, C04B 38/08

(30) Priority: **10.12.93 IT GE930105**

(43) Date of publication of application:
**14.06.95 Bulletin 95/24**

(84) Designated Contracting States:
**AT BE CH DE DK ES FR GB GR IE LI LU MC NL PT SE**

(71) Applicant: **MINISTERO DELL' UNIVERSITA' E DELLA RICERCA SCIENTIFICA E TECNOLOGICA**
**Via Lungotevere Thaon de Revel 76**
**I-00196 Roma (IT)**

(72) Inventor: **Tamburini, Mario**
**Via Parmeggiani 4**
**I-40131 Bologna (IT)**

(74) Representative: **Porsia, Attilio, Dr.**
**c/o Succ. Ing. Fischetti & Weber**
**Via Caffaro 3/2**
**I-16124 Genova (IT)**

(54) **Light aggregates for low-density structural concrete compositions.**

(57) Light aggregate for use as inert material in a concrete composition, comprising a mix of: ground diatomaceous rock making up 85-95% by weight of the mix; a melting additive (A) (2.5-7.5% by weight) and an expander additive (B) (1.5-10.5% by weight); this mix is made up with water, transformed into granules and heat-treated at between 1100 and 1250°C for a period of between 5 and 25 minutes.

Both the melting additive (A) and the expander additive (B) can be wastes from the secondary processing of aluminum.

Rank Xerox (UK) Business Services
(3.10/3.09/3.3.4)

The present invention relates to aggregates for structural concrete compositions for building construction, in particular light aggregates for light-weight concrete compositions.

For a long time, it has been clear to experts in the field that it was necessary to develop so-called "light" concretes, that is to say light-weight concretes, as distinct from commonly used concretes. The latter consist of compositions of hydraulic binder, generally cement, water and inert, generally sand or gravel, which are largely used in both civil and industrial construction, the volumetric mass of which is normally about 2400 kg/m$^3$.

Normally, if the lightening of a concrete consists solely in reducing the weight of the inert contained in the mix, this type of operation leads to a significant deterioration in the mechanical strength. The principal problem to be solved is the necessity of obtaining a product which has a lower density but mechanical properties which are hardly varied with respect to the material traditionally used.

Such results are very difficult to check in the case of the solutions adopted by the state of the art, which in most cases give materials which reach extremely low densities, but at the expense of the mechanical properties. It is clear that concretes of this type are not in fact suitable for structural use.

The product LIEVOCEM (registered name) made by Levocell S.p.A. consists of a composition which, in addition to the said hydraulic binder and inert, combined with water, contains a foam obtained with organic surfactants. The presence of this foam allows the formation of microbubbles in the interior of the concrete; the product thus obtained has extremely low densities, of the order of 300-800 kg/m$^3$, but also has on the other hand compressive strengths of 15-25 kgf/cm$^2$. With such properties, the material cited above cannot safely be used for structural purposes.

A result of analogous type is also obtained with the product NEOPOR (registered name) made by Neopor-Verfahrenstechnik GmbH, which consists in the use of a surfactant which, via a complex preparation system, allows a concrete of low density to be produced. The mechanical properties, even though better than those of the products cited before, are nevertheless strongly linked to the density of the concrete obtained, of the order of 80 kgf/cm$^2$ for a density of 1200 kg/m$^3$. In this case too a structural use of the concrete produced by such a method is somewhat debatable.

As distinct from the two systems described above, the product LECA (registered name) made by Laterlite S.p.A. consists of an inert material, in particular a clay, expanded by heat treatment. In this case, the lightening of the concrete is therefore effected by means of a lightening of the inert material. However, this product also has a low compressive strength (10-60 kg/cm$^2$) which, in particular, is inversely proportional to its particle size. Such a product is commonly used as an acoustic and thermal insulation material. Moreover, the granulated product in question has a defect of a certain water absorption capacity.

In the Italian Patent Application No. 20045 A/88 in the name of Tecniche Industriali S.r.l., a light-weight concrete composition is described which consists of an inert material of fossil flour, a hydraulic binder, a plasticizer and an emulsifier. In this case, the aim is, both to lighten the inert material, which is treated in a furnace in a manner analogous to the abovementioned product, and moreover also to lighten the composition by adding the two organic additives. The results are quite good (195 kgf/cm$^2$ for a density of 1050 kg/m$^3$), but it is not possible to leave the two organic reactants out of consideration.

It is the object of the present invention to obtain a light-weight structural concrete without the use of organic foams, using instead recovered industrial products, with such a concrete combining a substantially low density with the mechanical strength typical of a "heavy" concrete of the usual type, and as a result, as impermeable as possible to water.

To achieve this object, the present invention provides a light aggregate for use as inert material in a light-weight concrete composition, which light aggregate consists of a mix comprising ground diatomaceous rock (85-95% by weight relative to the weight of the mix) mixed with a melting additive (2.5-7.5% by weight), essentially consisting of NaCl, and an expander additive (1.5-10.5% by weight), followed by heat treatment at a temperature of between 1100 and 1250°C for time intervals of from 5 to 25 minutes.

Such an expander additive is essentially composed of a mixture of Al, NaCl, Al$_2$O$_3$, AlN, FeO and SiO$_2$, with NaCl, Al$_2$O$_3$, and SiO$_2$ being preponderant.

Advantageously, such melting additives and expander additives are both wastes from the secondary processing of aluminium.

The ground diatomaceous rock suitable for the composition according to the invention has a particle size of less than or equal to 250 $\mu$m.

The melting and expander additives have a particle size of between 0 and 0.8 mm, in particular 70-75% by weight at less than 0.4 mm, 15-20% by weight at 0.4-0.6 mm and 8-10% by weight at 0.6-0.8 mm. Preferably, a particle size of less than 0.250 mm is used.

Advantageously, 60% by weight of the granules of light aggregate have a particle size of between 8 and 16 mm, and 40% by weight have a particle size of between 0 and 7 mm.

Further advantages and characteristics will become evident from the following detailed description of an embodiment of the present invention, carried out by way of example without implying a restriction.

The light aggregate as above contains essentially a component of diatomaceous rock and two additives, a melting additive (which will be termed component A below) and an expander additive (which will be termed component B below), which are both derived from the wastes of the secondary processing of aluminium.

The diatomaceous rock has been selected from the minerals originating from Sicily and Emilia-Romagna, which have been found to be the most suitable for the purpose of the present invention. Such a diatomaceous rock has essentially a composition comprising about 86% of $SiO_2$, the major part of which is in a crystalline form and only a small part (of less than 5%) is of amorphous form, 2.5% by weight of both $Fe_2O_3$ and $Al_2O_3$, CaO (20%) and MgO (10%) and a water content equal to 9% by weight.

Such a rock is crushed and ground; the finer the grinding, the better are the results. Normally, this can be pushed down to a particle size value of about 250 $\mu$m, it being too costly to go below this in the light of the derived benefits. In the preparation illustrated below, a ground diatomaceous rock passing through a screen of 250 $\mu$m was used.

Subsequently, the ground rock is mixed with the additives described above. The said melting additive A and expander additive B originate, as stated, from wastes of the secondary processing of aluminium. The melting additive A essentially consists of impure sodium chloride which, owing to its low melting point, assists in the fusion of the ground rock. The additive B, of a more complex nature, is responsible for the expansion of the diatomaceous rock particles, even though the mechanism governing such an expansion is not yet sufficiently clear. One of the possible compositions of the additive B provides:

|  | % |
| --- | --- |
| NaCl | 30 |
| Metallic Al | 3 |
| $Al_2O_3$ | 22 |
| AlN | 3 |
| FeO | 4 |
| Silicates | 28 |

The residue comprises mixtures of the oxides of Ti, K, Ca, Mn, Cr, Cu, Zn, Sr and Pb. Amongst the probable agents responsible for the expanding effect, it is thought that these can be the oxides of iron, the chlorides and perhaps the nitrides of aluminium.

For these additives too the particle size has a lower limit of 250 $\mu$m, always because of the economic considerations already mentioned above. In particular, the additives are present in following particle sizes:

| PARTICLE SIZE CLASS (mm) | A (%) | B (%) |
| --- | --- | --- |
| 0.80-0.60 | 8 | 11.7 |
| 0.60-0.40 | 19 | 16.6 |
| 0.40 | 73 | 71.7 |

Nevertheless, it has been observed that screening of the additive through a sieve of 0.074 mm mesh width gave qualitatively better results.

The proportions of the abovementioned components in the mixture can vary: in general, the ground diatomaceous rock represents 85 to 95% by weight, while A + B represents 5 to 15% by weight with A and B in various ratios between them. Obviously, when the quantity of additive is increased, the resulting aggregate for concretes will be very light but equally will have a lower compressive strength.

The mixture of the abovementioned three components is made up with water, whose quantity is not relevant, since it will be lost on heating. The mix is reduced to beads of 0.01 to 16 mm diameter, preferably 3 to 12 mm.

Subsequently, these beads are subjected to heating in order to obtain the desired expansion; the heating is carried out according to a linear procedure of phases of both increases and decreases in the temperature.

The product obtained is a granulated product of low specific gravity, which is highly vitrified and hence very impermeable and can safely be used in the concrete compositions.

In the examples which are reported below, tests have been carried out for characterizing the properties of both the granules of light aggregate according to the present invention and of the concrete prepared therewith.

## Example 1

Four mixes of diatomaceous rock + A + B were prepared with decreasing quantities of A + B. Heating was carried out as described above on various specimens. The volumetric mass of the various aggregates obtained was determined on specimens of the four different mixes prepared (UNI 7549/5). The various granules were then subjected to an imbibition test according to UNI 7549/6: that is to say a certain exactly weighed quantity of granules is placed into a cylinder with water for 30 minutes. After such a period of time, the granules are drained and then weighed. The imbibition coefficient obtained is:

$$C_{imb} = \frac{P_b - P_a}{P_a} \times 100$$

where $P_b$ is the weight of the soaked granules and $P_a$ is the weight of the drained granules. The data are reported in Table I; as reference, the same tests were carried out on the product LECA (Laterlite S.p.A.), using samples having volumetric masses comparable with those of the aggregate according to the present invention.

## Example 2

Four samples of aggregate granules prepared as in Example 1 are subjected to a crushing strength test (UNI 7549/7). The granules are, after drying at 110°C, placed into a cylinder of known volume to a height of 100 mm. A piston is then introduced into the cylinder and, by means of a spacer and a blocking ring, a stroke of 20 mm is prearranged for this piston, to be carried out at a constant velocity by the action of a press. After the end of the operation, the applied compressive load in kgf/cm$^2$ is noted.

The data are reported in Table 2 together with those obtained on samples of LECA, having comparable volumetric masses.

## Example 3

A concrete was prepared with the granules of light aggregate according to the present invention. Granules of aggregate of a particle size of 8-16 mm (60%) and 0-7 mm (40%) were mixed with Portland cement 425. This cement was used in a quantity of 400 kg/m$^3$ with an A/C ratio of 0.45. The concrete obtained was used for forming a series of 3 small cubes of 15 cm edge length, on which the compressive test was carried out (UNI 6132). The result was that the specimens, having a mean density of less than 1330 kg/m$^3$, showed a mean compressive strength of about 265 kgf/cm$^2$.

4

Table 1

| | LECA | Aggregate from Example 1 |
|---|---|---|
| Actual volumetric mass of the granules (kg/mc) <br> 30 minutes' imbibition coefficient (%) | 530 <br> 15 | 528 <br> 14 |
| Actual volumetric mass of the granules (kg/mc) <br> 30 minutes' imbibition coefficient (%) | 770 <br> 8 | 737 <br> 3 |
| Actual volumetric mass of the granules (kg/mc) <br> 30 minutes' imbibition coefficient (%) | 820 <br> 9 | 817 <br> 2 |
| Actual volumetric mass of the granules (kg/mc) <br> 30 minutes' imbibition coefficient (%) | 1000 <br> 8 | 897 <br> 2 |

Table 2

| | LECA | Aggregate from Example 2 |
|---|---|---|
| Actual volumetric mass of the granules (kg/mc) <br> Crushing strength ($kgf/cm^2$) | 530 <br> 16 | 528 <br> 18 |
| Actual volumetric mass of the granules (kg/mc) <br> Crushing strength ($kgf/cm^2$) | 770 <br> 23 | 737 <br> 45 |
| Actual volumetric mass of the granules (kg/mc) <br> Crushing strength ($kgf/cm^2$) | 820 <br> 37 | 817 <br> 59 |
| Actual volumetric mass of the granules (kg/mc) <br> Crushing strength $kgf/cm^2$ | 1000 <br> 39 | 897 <br> 72 |

## Claims

1. Light aggregate for use as inert material in a concrete composition, characterized in that it comprises a mix of: ground diatomaceous rock making up 85-95% by weight of the mix; a melting additive (A) (2.5-7.5% by weight) and an expander additive (B) (1.5-10.5% by weight), this mix being made up with water, transformed into granules and heat-treated at between 1100 and 1250°C for a period of between 5 and 25 minutes.

2. Light aggregate according to Claim 1, characterized in that both the melting additive (A) and the expander additive (B) are wastes from the secondary processing of aluminium.

3. Light aggregate according to Claims 1 and 2, characterized in that the melting additive (A) consists essentially of impure sodium chloride.

4. Light aggregate according to Claims 1 and 2, characterized in that the expander additive (B) is a composition comprising Al, NaCl, $Al_2O_3$, AlN, FeO and $SiO_2$, with NaCl, $Al_2O_3$ and $SiO_2$ being preponderant.

5. Light aggregate according to the preceding claims, wherein the said ground diatomaceous rock has a particle size of less than or equal to 250 $\mu$m.

6. Light aggregate according to the preceding claims, wherein the melting additive (A) and the expander additive (B) have a particle size from 0 to 0.8 mm, in particular 70-75% by weight at less than 0.4 mm, 15-20% by weight at 0.4-0.6 mm and 8-10% by weight at 0.6-0.8 mm, preferably a particle size smaller than 0.250 mm.

7. Light aggregate according to Claims 1 to 6, wherein 60% of the granules of light aggregate have a particle size between 8 and 16 mm and 40% have a particle size between 0.01 and 7 mm.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 537 635 (CONTENTO TRADE S.A.S. DI CIOFFI ILARIA)<br>* page 2, line 21 - line 33; example 2 *<br>* page 3, line 9 - page 4, line 4 * | 1-4 | C04B18/02<br>C04B14/08<br>C04B38/08 |
| A |  | 5-7 | |
| A | EP-A-0 488 042 (CONTENTO TRADE S.A.S. DI CIOFFI ILARIA)<br>* claim 5 * | 1,5-7 | |
| A | DE-C-346 283 (L. G. DALHOFF ET AL.)<br>* claim 1 * | 1 | |
| A | US-A-1 970 280 (A.B. CUMMINS)<br>* claim 1 * | 1,5 | |
| A | CHEMICAL ABSTRACTS, vol. 118, no. 8, 22 February 1993, Columbus, Ohio, US; abstract no. 65678b, H. HARA page 374 ; * abstract *<br>& JP-A-04 254 448 (ID.) | 1,7 | TECHNICAL FIELDS SEARCHED (Int.Cl.6)<br><br>C04B |

The present search report has been drawn up for all claims

| Place of search | Date of completion of the search | Examiner |
|---|---|---|
| THE HAGUE | 23 March 1995 | Daeleman, P |

EPO FORM 1503 03.82 (P04C01)